Europäisches Patentamt

European Patent Office

Office européen des brevets

(19)

(11) Veröffentlichungsnummer: **0 078 984**
**B1**

(12) **EUROPÄISCHE PATENTSCHRIFT**

(45) Veröffentlichungstag der Patentschrift:
27.01.88

(51) Int. Cl.⁴: **G 01 B 3/30,** G 01 B 21/04

(21) Anmeldenummer: **82109917.3**

(22) Anmeldetag: **27.10.82**

(54) Verfahren zur Kalibrierung von Taststiften an Mehrkoordinaten-Messmaschinen.

(30) Priorität: **07.11.81 DE 8132664 U**

(43) Veröffentlichungstag der Anmeldung:
**18.05.83 Patentblatt 83/20**

(45) Bekanntmachung des Hinweises auf die Patenterteilung:
**27.01.88 Patentblatt 88/4**

(84) Benannte Vertragsstaaten:
**CH DE FR GB IT LI SE**

(56) Entgegenhaltungen:
**DE - A - 2 850 517**
**FR - A - 2 201 453**

(73) Patentinhaber: **Firma Carl Zeiss, D-7920 Heidenheim (Brenz) (DE)**

(72) Erfinder: **Herzog, Klaus, Kopernikusstrasse 42, D-7082 Oberkochen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Beschreibung

Die Erfindung betrifft ein Verfahren zur Kalibrierung von Taststiften, die an selbstzentrierend eintastenden Messsystemen von Mehrkoordinatenmessmaschinen befestigt sind.

Die Mess- bzw. Tastsysteme von Mehrkoordinatenmessmaschinen sind häufig mit mehreren Taststiften, (z.B. in der Form von sternförmigen Taststiftkombinationen), oder mit einem Dreh-Schwenktaster bestückt. Die Kugelmittelpunktskoordinaten der Einzeltaster bzw. deren nach Drehung eingenommene Position muss in Bezug auf ihre gegenseitige Relativlage kalibriert werden, wenn zur Messung eines Werkstückes mehr als nur ein einziger Taststift der Kombination oder mehr als eine Stellung des Schwenktasters benutzt werden soll.

Die Enden der Taststifte tragen in der Regel eine Kugel. Zur Bestimmung der Koordinaten ihres Mittelpunktes wird beim Kalibriervorgang ein geeignetes Eichnormal beispielsweise in Form eines Würfels oder einer Kugel mit dem gleichen Taststift von verschiedenen Seiten mindestens dreimal (Würfel) bzw. viermal (Kugel) angefahren. Bei einem mit fünf Taststiften bestückten Tastsystem werden also zur Kalibrierung fünfzehn bis zwanzig Antastungen vorgenommen, was sehr zeitaufwendig ist.

Aus der Firmenschrift S 60-21-002 d der Firma Carl Zeiss mit dem Titel: «Mess- und Tastsysteme bei Mehrkoordinaten-Messgeräten» ist es bekannt zur Messbereichserweiterung von Mehrkoordinaten-Messmaschinen einen Winkeltaster in Verbindung mit einem sogenannten Kugeltripel zu verwenden. Zur Kalibrierung des Taststiftes in den beiden Messbereichen zugeordneten Stellungen genügt dann eine einzige Eintastung in den Kugeltripel, wenn das verwendete Tastsystem zur Gruppe der «messenden Taster» gehört, die ein zentrierendes Eintasten erlauben.

Mit diesem Kugeltripel ist es jedoch nicht möglich, gleichzeitig Taststifte zu kalibrieren, deren Achsrichtungen stark voneinander abweichen.

Aus der FR-A-2 201 453 ist es bekannt die Tastkugeln eines Koordinatenmessgerätes bezüglich ihrer Höhe über dem Messtisch mit Hilfe von Referenzkörpern zu kalibrieren, die eine ringförmige Kerbe an ihrem Aussenumfang aufweisen. Die bekannten Referenzkörper erlauben jedoch weder ein selbstzentrierendes Eintasten bezüglich aller drei Raumrichtungen, noch lässt sich die räumliche Lage mehrerer Tastkugeln einer Taststiftkombination zueinander damit bestimmen.

Der Erfindung liegt die Aufgabe zugrunde, ein einfaches Verfahren anzugeben, das in Verbindung mit messenden Tastsystemen ein schnelles Kalibrieren von komplizierten Taststiftanordnungen bzw. stark voneinander abweichenden Taststiftstellungen erlaubt.

Diese Aufgabe wird durch die im Anspruch 1 angegebenen Massnahmen gelöst.

Bei diesem Verfahren reduziert sich der Kalibriervorgang auf eine Antastung pro Taststift, was bei der Vermessung von komplizierten Werkstücken, die Taststiftkombinationen mit vielen verschiedenartigen Taststiften bzw. einen Schwenktaster erfordern, zu einer erheblichen Einsparung an Messzeit führt.

Der zur Durchführung des Verfahrens nötige Aufwand ist dagegen vergleichsweise gering. Es sind lediglich ein besonderes Eichnormal vorzusehen, das mehrere aus zueinander konvergenten Flächen gebildete Zentrierelemente besitzt.

Die Zentrierelemente des Normals müssen ein selbstzentrierendes Eintasten erlauben, bestehen also u.a. aus konischen Bohrungen. Kugeltripeln oder Zylindertripeln bzw. besitzen Tetraederform.

Einige Ausführungsformen des Eichnormals werden nachfolgend anhand der beigefügten Zeichnungen erläutert werden:

Von den Figuren der beigefügten Zeichnungen zeigen:

Fig. 1 einen Schnitt durch ein erstes Ausführungsbeispiel eines Eichnormals;

Fig. 2 einen Schnitt durch ein zweites Ausführungsbeispiel eines Eichnormals.

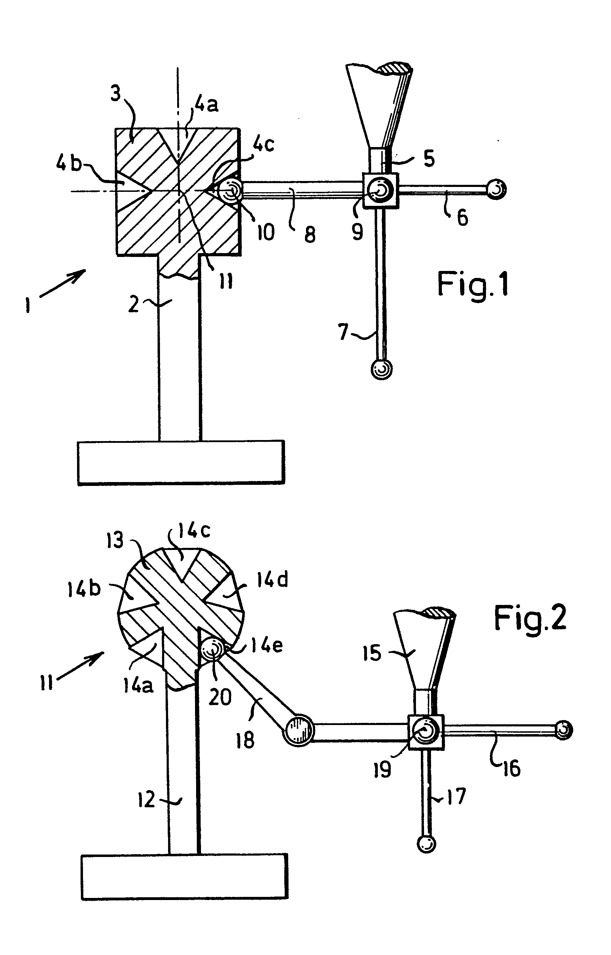

Das in Fig. 1 dargestellte Eichnormal 1 besteht aus einem Würfel 3, der auf einem Standfuss 2 befestigt ist. Fünf der sechs Seiten des Würfels tragen je eine konische Bohrung, von denen in der Schnittzeichnung die Bohrungen 4 a–c dargestellt sind. Das dargestellte Eichnormal 1 ist sehr gut zur Kalibrierung von sternförmigen Taststiftkombinationen wie z.B. des dargestellten Tasters 5 geeignet.

Nachfolgend wird der Vorgang des Kalibrierens der Taststifte 6–8 des Tasters 5 ausführlich erläutert:

Zuerst wird das Eichnormal 1 auf dem Tisch einer Koordinaten-Messmaschine befestigt. Danach wird die Lage des Eichnormals 1 im Koordinatensystem der Maschine, beispielsweise durch Antasten verschiedener Seiten des Normals mit ein und demselben Taststift bestimmt.

Die Geometrie der Bohrungen 4 des Normals 1, d.h. die Form und relative Lage der Kegelmantelflächen zueinander ist einmal durch Messungen ermittelt worden und in Form geeigneter Parameter wie Ausrichtungen, Kegelwinkel etc. im Rechner der Messmaschine gespeichert worden.

Beim anschliessenden, eigentlichen Kalibriervorgang werden nacheinander die Kugel 10 des Taststifts 8 in die Bohrung 4c, die an den Taststiften 7 bzw. 6 befestigten Kugeln in die Bohrungen 4a bzw. 4b und die am Taststift 9 befestigte Kugel in eine nicht dargestellte Bohrung auf der Rückseite des Würfels 3 eingefahren, wobei die Lageregelkreise der verwendeten Messmaschine die Kugeln zentrieren.

Vor oder nach jedem Antastvorgang, bei dem die Stellung des Taststifts 5 absolut im Koordinatensystem der Messmaschine gemessen und der Messwert in den Rechner der Messmaschine übernommen wurde, werden die Kennungen der zur Antastung verwendeten Kugel, z.B. die Kugel 10, und der dazugehörenden Bohrung, d.h. also der Bohrung 4c, in den Rechner eingegeben.

Anschliessend ist der Rechner in der Lage gemäss einem vorgegebenen, einfachen Programm aus dem Durchmesser der verwendeten Kugeln und der Geometrie und Lage der Bohrungen eindeutig die Lage der Mittelpunkte aller Tastkugeln zu berechnen.

Das in Fig. 2 dargestellte Eichnormal 11 besteht aus einer Kugel 13, die auf einem Standfuss 12 befestigt ist. Sie besitzt 9 Zentrierbohrungen: Neben der Bohrung 14c sind je vier weitere in 2 übereinanderliegenden Ebenen angebracht, von denen die Schnittzeichnung nur je zwei, die Bohrungen 14b, 14d bzw. 14a, 14e zeigt.

Mit diesem Eichnormal 11 ist auch das Einzentrieren von Taststiften möglich, die vom Werkstücktisch weg gerichtet sind, wie beispielsweise der mit seiner Kugel 20 in der Bohrung 14e sitzende, schwenkbare Taststift 18 des Tasters 15.

Wird der Taststift 18 im Zuge des Messvorganges an einem Werkstück verschwenkt so ist er durch einmaliges Einzentrieren in eine andere erreichbare Bohrung 14 wieder zu kalibrieren.

## Patentanspruch

Verfahren zur Kalibrierung von Taststiften, die an selbstzentrierend eintastenden Messsystemen von Mehrkoordinaten-Messmaschinen befestigt sind, gemäss dem
– ein Eichnormal (3, 13) an der Messmaschine befestigt wird, das mehrere aus zueinander konvergierenden Flächen gebildete Formelemente (4a–4c, 14a–14e) besitzt,
– die Orientierung des Eichnormals und die Lage der Formelemente relativ zum Koordinatensystem der Messmaschine bestimmt wird,
– die Kugeln (10; 20) der verschiedenen Taststifte bzw. in verschiedenen Taststiftstellungen jeweils einmal in ausgewählte Formelemente (4c; 14e) eingefahren werden und die Lage der Mittelpunkte der Tastkugeln berechnet wird, dadurch gekennzeichnet, dass die Formelemente Zentrierbohrungen (4a–4c, 14a–14e) sind,
– die durch Messung ermittelte Geometrie der Zentrierbohrungen (4a–4c, 14a–14e), z.B. ihre Form und Abstände im Rechner der Koordinatenmessmaschine gespeichert wird, wobei jede Zentrierbohrung eine Kennung erhält,
– dem Rechner die Durchmesser bzw. Kennungen der verwendeten Tastkugeln (10) bzw. Kugel (20) und die Kennungen der zugeordneten Zentrierbohrungen eingegeben werden
– und dass anschliessend ein Programm aufgerufen wird, das aus den eingegebenen Daten und Messwerten die Lage der Mittelpunkte der Tastkugeln (10, 20) zueinander bzw. in den verschiedenen Taststiftstellungen berechnet.

## Claim

Method of calibrating feeler pins which are fastened to self-centering scanning measurement systems in multi-coordinate measuring machines, according to which
– a calibration standard (3, 13) which has a plurality of form elements (4a–4c, 14a–14e) formed of surfaces which converge towards one another in secured to the measuring machine,
– the orientation of the calibration standard and the position of the form elements is determined relative to the coordinate system of the measuring machine,
– each of the balls (10; 20) of the various feeler pins respectively in different feeler-pin positions is introduced once into selected form elements (4c, 14e) and the position of the centres of the feeler balls is calculated, characterised in that the form elements are centering bores (4a–4c, 14a–14e)
– the geometry of the centering bores (4a–4c, 14a–14e) determined by measurement, e.g. their shapes and spacings, is stored in the computer of the coordinate measuring machine, each centering bore being given an identifier,
– the diameters or identifiers of the feeler balls (10) or ball (20) used and the identifiers of the associated centering bores are fed into the computer,
– and subsequently a program is called up which calculates, from the data and measurements fed in, the positions of the centres of the feeler balls (10, 20) relative to one another respectively in the various feeler pin portions.

## Revendication

Procédé pour étalonner des broches de palpage, qui sont fixées sur des systèmes de mesure de palpage avec auto-centrage de machines de mesure de coordonnées multiples, selon lequel:
– un dispositif d'étalonnage (3, 13) est fixé sur la machine de mesure et comporte plusieurs éléments de forme (4a–4c, 14a–14e) constitués de surfaces mutuellement convergentes,
– l'orientation du dispositif d'étalonnage et la position des éléments de forme est déterminée par rapport au système de coordonnées de la machine de mesure,
– les sphères (10; 20) des différentes broches de palpage, ou bien dans des positions différentes des broches de palpage, sont respectivement introduites une fois dans des éléments de forme sélectionnés (4c; 14e) et les positions des centres des sphères de palpage sont calculées, procédé caractérisé en ce que
– les éléments de forme sont des trous de centrage (4a–4c, 14a–14e),
– la géométrie, déterminée par des mesures, des trous de centrage (4a–4c, 14a–14e), par exemple leurs formes et leurs espacements, est mémorisée dans un ordinateur de la machine de mesure de coordonnées, chaque trou de centrage étant alors associé à une caractéristique,
– dans l'ordinateur sont introduits les diamètres ou les caractéristiques des sphères de palpage (10) ou des sphères (20) utilisées ainsi que les caractéristiques des trous de centrage associés,
– et en ce qu'ensuite est effectué un programme qui calcule, à partir des données et valeurs de mesure introduites, les positions des centres des sphères de palpage (10, 20) l'une par rapport à l'autre et dans les différentes positions des broches de palpage.

Fig.1

Fig.2